# EUROPÄISCHE PATENTSCHRIFT

(11) **EP 3 811 830 B1**
(45) Veröffentlichungstag und Bekanntmachung des Hinweises auf die Patenterteilung: **21.12.2022**
(21) Anmeldenummer: 20199032.2
(22) Anmeldetag: 29.09.2020
(51) Int. Cl.: A47J 31/44, A47J 31/60

(54) **GETRÄNKEAUTOMAT**
DRINKS MACHINE
DISTRIBUTEUR AUTOMATIQUE DE BOISSONS

(30) Priorität: 21.10.2019 DE 102019128286
(43) Veröffentlichungstag der Anmeldung: 28.04.2021
(73) Patentinhaber: Miele & Cie. KG, 33332 Gütersloh (DE); Eugster/Frismag AG, 8580 Amriswil (CH)
(72) Erfinder: Stösser, Gabriel, 8585 Langrickenbach (CH); Giezendanner, Stefan, 9054 Haslen (CH); Jungclaus, Dirk, 59302 Oelde (DE)

(56) Entgegenhaltungen:
- EP-A1- 2 918 201
- DE-A1-102014 114 083

## Beschreibung

Die Erfindung betrifft einen Getränkeautomaten zur Herstellung von Aufgussgetränken, insbesondere einen Getränkeautomaten zur Zubereitung von Kaffeegetränken oder Teegetränken, umfassend einen Milchvorratsbehälter, wenigstens eine in den Milchvorratsbehälter ragende Milchleitung mit einem Fluidansaugmittel an dem in den Milchvorratsbehälter hineinragenden Ende der Milchleitung, eine ebenfalls mit dem Fluidansaugmittel gekoppelte Spülmittelrücklaufleitung sowie einen Zentralauslauf mit Auslaufdüsen zur Abgabe der mit dem Getränkeautomaten hergestellten Getränke sowie deren Zusätze in ein unterhalb des Zentralauslaufs abgestelltes Trinkgefäß oder zur Abgabe des zur Reinigung und/oder Spülung des Strömungsleitungssystems des Getränkeautomaten erforderlichen Spülmittels in ein Gefäß oder in eine unterhalb des Zentralauslaufs vorhandene Abtropfschale.

Derartige Getränkeautomaten sind in sehr vielfältigen Ausgestaltungsvarianten bekannt. Der vorhandene Milchvorratsbehälter kann einen Bestandteil des Getränkeautomaten bilden oder separat aufgestellt werden. In jedem Fall wird die Milchleitung, die zum Teil auch als "Milchlanze" bezeichnet wird, in den Milchvorratsbehälter eingeführt, sodass beispielsweise mittels einer Pumpe oder durch die Anwendung des Venturiprinzips, also allgemein ausgedrückt, mit einem Unterdruck, die Milch aus dem Milchvorratsbehälter entnommen und für die Zubereitung eines Aufgussgetränkes verwendet werden kann. Ein ganz wesentliches Problem bei der Verarbeitung von Milch in Getränkeautomaten besteht jedoch darin, dass sich über eine gewisse Zeitdauer hinweg Milchreste in dem Strömungsleitungssystem ablagern können. Da Milch relativ schnell verdirbt, bestehen hier gesundheitliche Risiken. Darüber hinaus neigt Milch dazu, Teile des Strömungsleitungssystems eines Getränkeautomaten zu verkleben, sodass es im Extremfall sogar zu Ausfällen oder Verstopfungen kommen könnte, wenn die Strömungsleitungen und die Milch führenden Aggregate nicht regelmäßig gereinigt beziehungsweise gespült werden.

Aus der EP 2 272 409 B1 ist beispielsweise ein Getränkeautomat bekannt, dessen Milch führende Teile des Strömungsleitungssystems mit Hilfe des in dem Getränkeautomaten erzeugten Wasserdampfes oder des erhitzten Wassers gereinigt werden. Hierzu weist das Strömungsleitungssystem eine Handbetätigung in der Form eines Umschalters auf, wobei gemäß dem Offenbarungsgehalt der Druckschrift auch eine automatisierte Umschaltung möglich sein soll. Durch die Aktivierung des Umschalters wird während des Spülvorganges die in den Milchvorratsbehälter ragende Milchlanze verschlossen und das Spülmittel ausschließlich in dem restlichen Teil des Strömungsleitungssystems in Umlauf gebracht. Nachteilig ist hierbei, dass die in den Milchvorratsbehälter ragende Milchleitung separat vom Milchvorratsbehälter getrennt und manuell gereinigt werden muss. Dies stellt einen zusätzlichen Aufwand dar, der die Bedienung beziehungsweise die Handhabung eines derartigen Getränkeautomaten erschwert.

Eine sehr ähnliche Lösung ist auch aus der EP 3 045 092 B1 bekannt. Zur Absperrung der in den Milchvorratsbehälter hineinragenden Milchleitung dient hierbei ein Rückschlagventil. Das Rückschlagventil wird geschlossen, bevor das Spülmittel in den Teil des Strömungsleitungssystems eingebracht wird, der die Milch führt. Daher wird auch hierbei der sich in Strömungsrichtung betrachtet hinter dem Rückschlagventil befindliche Teil der Milchleitung nicht automatisch gereinigt und muss folglich manuell entfernt und anschließend separat gespült beziehungsweise gereinigt werden.

Ein weiterer Getränkeautomat ist aus der EP 2 695 559 A1 bekannt. Bei dieser Ausführungsvariante kommt ein Mehrfachventil zum Einsatz, das die einzelnen Strömungswege freigibt oder schließt. Ein mehrere Strömungsleitungen verbindendes T-Stück weist an den Eingangsstellen der Strömungsleitungen Sperrventile beziehungsweise Drosselstellen auf, sodass dadurch der Fluidstrom innerhalb des Strömungsleitungssystems geregelt werden kann. Bei dieser Ausführung soll auch eine Reinigung der in den Milchvorratsbehälter ragenden Milchleitung möglich sein, wobei dieser für Reinigungszwecke ausgeleert werden müsste, da ansonsten die Gefahr bestehen würde, dass die Milch mit Spülmittel verunreinigt wird. Dieser Getränkeautomat weist folglich die gleichen Nachteile auf, wie die zuvor beschriebenen, nämlich eine zu aufwendige Handhabung.

Aus der DE 10 2014 114 083 A1 ist darüber hinaus ein Fluidansaugmittel bekannt welches am Ende der in den Milchvorratsbehälter ragenden Milchleitung angeordnet wird. In dem Fluidansaugmittel ist ein Verschlussmittel vorhanden, dass zwischen einer Offenstellung und einer Verschlussstellung hin und herbewegt werden kann. Auf diese Weise besteht die Möglichkeit, zwei unterschiedliche Strömungswege freizugeben beziehungsweise zu sperren. Da das Fluidansaugmittel am Ende der Milchleitung, also innerhalb des Milchvorratsbehälters angeordnet ist, kann auf diese Weise auch die Milchleitung vollständig gereinigt werden, ohne dass hierfür der Milchvorratsbehälter entleert werden muss. Das in das Fluidansaugmittel eingeführte Spülmittel wird über eine Spülmittelrücklaufleitung abgeführt. Während des Reinigungsvorganges erfolgt dabei auch die Reinigung des Fluidansaugmittels selbst.

Um die aus dem Zentralauslauf ablaufenden Spülmittelreste auffangen zu können, befindet sich unterhalb des Zentralauslaufs eine Abtropfschale, die durch eine Abdeckung optisch geschlossen ist. Diese Abdeckung wird häufig auch als "Abtropfblech" bezeichnet und weist Öffnungen auf, was bedeutet, dass unter jeder Auslaufdüse auch eine Öffnung zur Abführung von Flüssigkeitsresten vorhanden ist, um zu vermeiden, dass sich Flüssigkeitsreste auf dem Abtropfblech absetzen und damit einen unsauberen Eindruck erwecken. Je mehr Öffnungen jedoch vorhanden sind, um so geringer und instabiler wird die Abstellfläche als Stellfläche für ein Trinkgefäß, in das das mit dem Getränkeautomaten hergestellte Aufgussgetränk gefüllt werden soll. Dies bereitet insbesondere bei sehr kleinen Tassen, also beispielsweise bei Espressotassen, Schwierigkeiten. Für derartig kleine Trinkgefäße besteht bei den bekannten Ausführungen eines Getränkeautomaten folglich die Gefahr, dass das Trinkgefäß instabil steht und möglicherweise sogar umkippen kann, während das Aufgussgetränk in das Trinkgefäß gefüllt wird.

Der Erfindung stellt sich somit das Problem, eine automatisierte und bevorzugt programmgesteuerte Reinigung beziehungsweise Spülung eines Getränkeautomaten zu ermöglichen, bei der auch die in den Milchvorratsbehälter ragende Milchleitung gereinigt wird und zudem die Aufstellfläche auf dem Abtropfblech derart verbessert wird, dass auch kleine Trinkgefäße sicher abgestellt werden können.

Erfindungsgemäß wird dieses Problem durch einen Getränkeautomaten mit den Merkmalen des Patentanspruchs 1 gelöst.

Vorteilhafte Ausgestaltungen und Weiterbildungen der Erfindung ergeben sich aus den nachfolgenden Unteransprüchen.

Ein Getränkeautomat zur Herstellung von Aufgussgetränken, umfassend einen Milchvorratsbehälter, wenigstens eine in den Milchvorratsbehälter ragende Milchleitung mit einem Fluidansaugmittel an dem in den Milchvorratsbehälter hineinragenden Ende der Milchleitung, eine ebenfalls mit dem Fluidansaugmittel gekoppelte Spülmittelrücklaufleitung sowie einen Zentralauslauf mit Auslaufdüsen zur Abgabe der mit dem Getränkeautomaten hergestellten Getränke sowie deren Zusätze in ein unterhalb des Zentralauslaufs abgestelltes Trinkgefäß oder zur Abgabe des zur Reinigung und/oder Spülung des Strömungsleitungssystems des Getränkeautomaten erforderlichen Spülmittels in ein Gefäß oder in eine unterhalb des Zentralauslaufs vorhandene Abtropfschale, wurde erfindungsgemäß dahingehend weitergebildet, dass eine der vorhandenen Auslaufdüsen des Zentralauslaufs einen Anschluss aufweist, an den die Spülmittelrücklaufleitung angeschlossen ist.

Mit der Erfindung gelingt es, den Zentralauslauf sehr einfach und kompakt auszuführen, was dadurch erreicht wird, dass nunmehr lediglich noch zwei Auslaufdüsen erforderlich sind. Diese Ausführung des Zentralauslaufs erfordert auch in der unterhalb des Zentralauslaufs vorhandenen Abstellfläche lediglich zwei, zu den Auslaufdüsen korrespondierende Öffnungen zur Abführung vorhandener Flüssigkeitsreste in die darunter befindliche Abtropfschale. Somit ist auch die Abstellfläche beziehungsweise das Abtropfblech einfacher ausgeführt, als bei bisher bekannten Getränkeautomaten. Das Trinkgefäß kann darüber hinaus unabhängig von seiner Größe standfest aufgestellt werden, sodass ein Umkippen beim Abfüllen des in dem Getränkeautomaten hergestellten Aufgussgetränkes in das Trinkgefäß nicht mehr zu befürchten ist. Einen wesentlichen Bestandteil der erfindungsgemäßen Lösung bildet auch das Fluidansaugmittel, dessen Aufbau und Verwendung sehr detailliert in der eingangs bereits zitierten DE 10 2014 114 083 A1 beschrieben ist, auf die hiermit Bezug genommen wird, weil mit dieser Lösung auch eine automatisierte Reinigung der in den Milchvorratsbehälter ragenden Milchleitung möglich wird.

Gemäß einer ersten Ausgestaltung der Erfindung wird vorgeschlagen, dass die in den Milchvorratsbehälter hineinragende Milchleitung während der Durchführung eines Reinigungs- und Spülprogrammes für die Zuführung des Spülmittels nutzbar ist. Mit dieser Lösung weist die Milchleitung eine Doppelfunktion auf und es können zusätzliche Fluidleitungen eingespart werden. Die Milchleitung dient folglich einerseits als Milchleitung im eigentlichen Sinne und andererseits als Spülleitung für die Durchführung eines Reinigungsprogrammes. Ein ganz wesentlicher Vorteil, der sich aus diesem Vorschlag ergibt, besteht darin, dass während der Durchführung eines Reinigungs- und/oder Spülprogrammes auch die Milchleitung gereinigt wird, ohne dass es hierfür zusätzlicher, insbesondere manueller Tätigkeiten bedarf. Damit wird mit dem erfindungsgemäßen Getränkeautomaten eine automatische Reinigung des Strömungsleitungssystems und der in den Milchvorratsbehälter ragenden Milchleitung möglich.

Wie eingangs bereits ausgeführt wurde, ist ein wesentlicher Aspekt der Erfindung darin zu sehen, dass der Zentralauslauf einfacher und kompakter ausgeführt werden kann, weil der Zentralauslauf lediglich zwei Auslaufdüsen aufweist. Dabei wird der am Zentralauslauf vorhandene Anschluss dazu genutzt, die Spülmittelrücklaufleitung mit der Auslaufdüse für Milch oder Milchschaum oder alternativ mit der Auslaufdüse für Kaffee beziehungsweise Tee zu koppeln. Anders ausgedrückt behält die jeweils andere Auslaufdüse ihre bisherige Funktion weiterhin bei, während die erfindungsgemäß angepasste Auslaufdüse eine Doppelfunktion erhält.

Da bei einem erfindungsgemäßen Getränkeautomaten bevorzugt das schwerkraftbedingte Prinzip des Auslaufens der hergestellten Getränke beziehungsweise Getränkemischungen und der zu diesen hinzuzufügenden Zusätzen genutzt wird, ist es zur Vermeidung eines sich ausbildenden Unterdruckes hilfreich, wenn der Zentralauslauf mindestens eine Druckausgleichsöffnung aufweist. Eine derartige Druckausgleichsöffnung ist dann entbehrlich, wenn die hergestellten Aufgussgetränke und deren Zusätze mittels einer Pumpe, also druckbeaufschlagt aus dem Zentralauslauf abgeführt werden. Hierfür sind allerdings zusätzliche Aggregate, wie beispielsweise die erwähnte Pumpe, erforderlich, was den Getränkeautomaten insgesamt aufwendiger gestaltet.

Während der Reinigung eines Strömungsleitungssystems werden unterschiedliche Phasen durchlaufen. Zunächst wird in der Regel ein flüssiges oder in Wasser gelöstes Reinigungsmittel eingesetzt, das mindestens einmal durch das Stömungsleitungssystem geführt wird und dabei einen Reinigungs- und/oder Entkeimungs- und/oder Entkalkungsvorgang auslöst, was im vorliegenden Fall jeweils synonym zu betrachten ist. Im Anschluss daran erfolgt regelmäßig eine abschließende Spülung mit klarem Wasser, um Reinigungsmittelreste aus dem Stömungsleitungssystem zu entfernen und zu vermeiden, dass diese mit einem nachfolgend zu erzeugenden Aufgussgetränk vermischt werden. Anstelle des Wassers kann auch Wasserdampf zum Einsatz kommen. In diesem Sinne kann das Spülmittel ein Reinigungsmittel, Wasser oder Wasserdampf sein. Das erforderliche Wasser stammt dabei in an sich bekannter Weise aus einer Wasserquelle, bei der es sich um einen Wassertank oder einen Wasseranschluss handeln kann.

Ein Getränkeautomat nach der Erfindung weist ein Fluidansaugmittel auf, das an dem in den Milchvorratsbehälter hineinragenden Ende der Milchleitung angeordnet ist. Das konstruktiv bevorzugt entsprechend den Ausführungen in der DE 10 2014 114 083 A1 ausgeführte Fluidansaugmittel weist einen Ansaugraum mit einer Ansaugöffnung zum Ansaugen der Milch sowie ein Verschlussmittel auf, wobei das Verschlussmittel zwischen einer Offenstellung und einer Verschlussstellung hin- und her bewegbar ist, sodass dadurch die Ansaugöffnung geöffnet oder verschlossen werden kann. Zum Ansaugen der Milch wird das Verschlussmittel in die Offenstellung gebracht.

Die dieser Offenstellung entgegengesetzte Position des Verschlussmittels stellt dessen Verschlussstellung dar, bei der die Ansaugöffnung geschlossen ist, sodass keine Milch über das Fluidansaugmittel in die Milchleitung gelangen kann. Das Fluidansaugmittel verfügt ferner über einen Zulauf, der dazu dient, bei geschlossener Ansaugöffnung durch die Milchleitung ein Spülmittel in den Ansaugraum einzuleiten. Auf diese Weise können sowohl die Milchleitung, als auch das Fluidansaugmittel von dem Spülmittel durchströmt und gereinigt werden. Im Anschluss an diesen Vorgang wird das Spülmittel über die ebenfalls an dem Fluidansaugmittel angeschlossene Spülmittelrücklaufleitung zum Zentralauslauf zurück- und über den Zentralauslauf abgeführt. Hierzu weist der Zentralauslauf in erfindungsgemäßer Weise einen Anschluss im Bereich einer der vorhandenen Auslaufdüsen auf, sodass die Spülmittelreste über diese Auslaufdüse entsorgt werden können.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen als Kaffeevollautomat ausgeführten Getränkeautomaten als freistehendes Einzelgerät und in einer räumlichen Ansicht,
- Figur 2:: ausschnittsweise und in stark vereinfachter Darstellung den Zentralauslauf eines Getränkeautomaten mit zugehörigen Strömungsleitungen,
- Figur 3:: ein Fluidansaugmittel eines Getränkeautomaten in seiner Offenstellung,
- Figur 4: und Figur 5:: ein Fluidansaugmittel eines Getränkeautomaten in seiner Verschlussstellung einen stark vereinfachten Teil des Strömungsleitungssystems eines Getränkeautomaten.

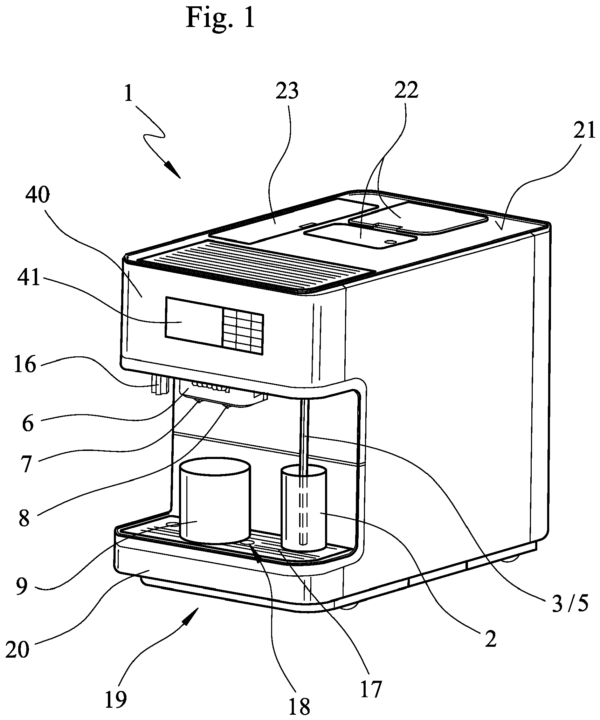

In der Figur 1 ist ein Getränkeautomat 1 in einer Ausführung als Kaffeevollautomat dargestellt. Bei dem Getränkeautomaten 1 handelt es sich um ein freistehendes Einzelgerät. Von seiner Front 19 her betrachtet weist der Getränkeautomat 1 unter einem oberen Vorbau 40, in dem sich auch eine Eingabe- und Anzeigeeinrichtung 41 befindet, einen Zentralauslauf 6 auf, dessen Funktion in der Ausgabe der mit dem Getränkeautomaten 1 hergestellten Aufgussgetränke oder deren Zusätze in ein unterhalb des Zentralauslaufs 6 abgestelltes Trinkgefäß 9 besteht. Für die Ausgabe der erzeugten Aufgussgetränke beziehungsweise der Zugabe von Zusätzen in die hergestellten Aufgussgetränke dienen unterhalb des Zentralauslaufs 6 vorhandene Auslaufdüsen 7 und 8. Eine erfindungsgemäße Besonderheit besteht im vorliegenden Beispiel bereits darin, dass der Zentralauslauf 6 lediglich zwei Auslaufdüsen 7, 8 aufweist. Seitlich neben dem Zentralauslauf 6 ist unterhalb des oberen Vorbaus 40 ferner eine Dampfdüse 16 zu erkennen, die der Abgabe von Wasserdampf zum Aufschäumen von Getränken oder Getränkezusätzen dient. So kann mit dieser Dampfdüse 16 zum Beispiel Milchschaum erzeugt werden. Auf der der Dampfdüse 16 gegenüberliegenden Seite ist unterhalb des oberen Vorbaus 40 eine Milchleitung 3 erkennbar, die in einen Milchvorratsbehälter 2 mündet. Die Milchleitung 3 reicht dabei bis zum Boden des Milchvorratsbehälters 2 und verfügt an ihrem bodennahen Ende über ein Fluidansaugmittel 4, welches in der Darstellung der Figur 1 jedoch nicht erkennbar ist. In den Milchvorratsbehälter 2 ragt darüber hinaus eine Spülmittelrücklaufleitung 5, über die das Spülmittel 11 während der Durchführung eines Reinigungs- oder Spülprogrammes zurückgeführt wird. Der Milchvorratsbehälter 2 und das Trinkgefäß 9 sind nebeneinander auf einer Abstellfläche 17 aufgestellt, die im vorliegenden Fall als Abtropfblech ausgeführt ist und daher mehrere Öffnungen 18 aufweist, über die Flüssigkeitsreste in eine unterhalb des Abtropfbleches 17 vorhandene und in der Figur 1 nicht erkennbare Auffangschale abgeführt werden. Sowohl die Auffangschale, als auch das Abtropfblech 17 befinden sich innerhalb eines unteren Vorbaus 20 des Getränkeautomaten 1. Zu bemerken ist an dieser Stelle noch, dass für jede vorhandene Auslaufdüse 7, 8 je eine Öffnung 18 vorgesehen ist, wobei jeweils unterhalb jeder Auslaufdüse 7, 8 genau eine Öffnung 18 vorhanden ist. Aufgrund des Umstandes, dass in dem Abtropfblech 17 lediglich zwei Öffnungen 18 vorgesehen werden, können auch kleinere Trinkgefäße 9 sicher auf der Abstellfläche 17 abgestellt werden, ohne dass diese instabil werden und möglicherweise beim Einfüllen des erzeugten Aufgussgetränkes umkippen. Für die Herstellung der Aufgussgetränke mit dem in Figur 1 gezeigten Getränkeautomaten 1 wird in der Regel Wasser benötigt, das aus einem Wassertank 23 stammt, dessen Verschlussdeckel sich an der Oberseite 21 des Getränkeautomaten 1 befindet. Seitlich neben dem Wassertank 23 sind zudem mehrere Behälterdeckel 22 erkennbar. Die Behälterdeckel 22 decken dabei Vorratsbehälter ab, in denen sich zum Beispiel unterschiedliche Tee- oder Kaffeesorten befinden können.

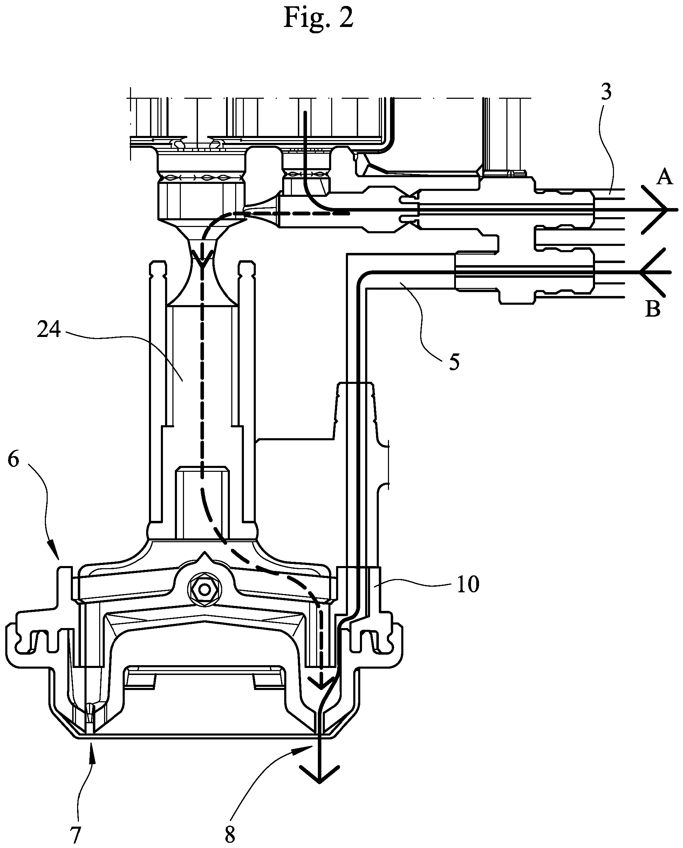

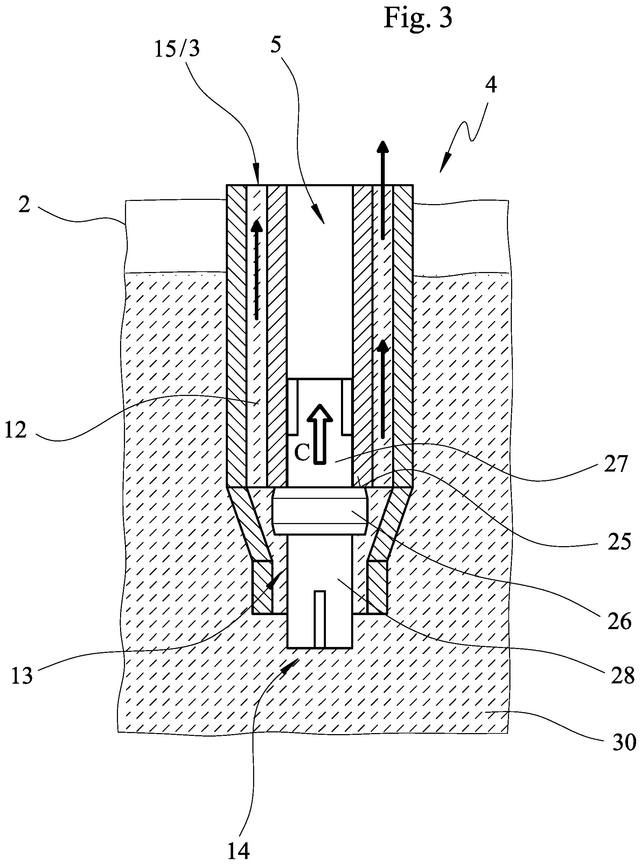

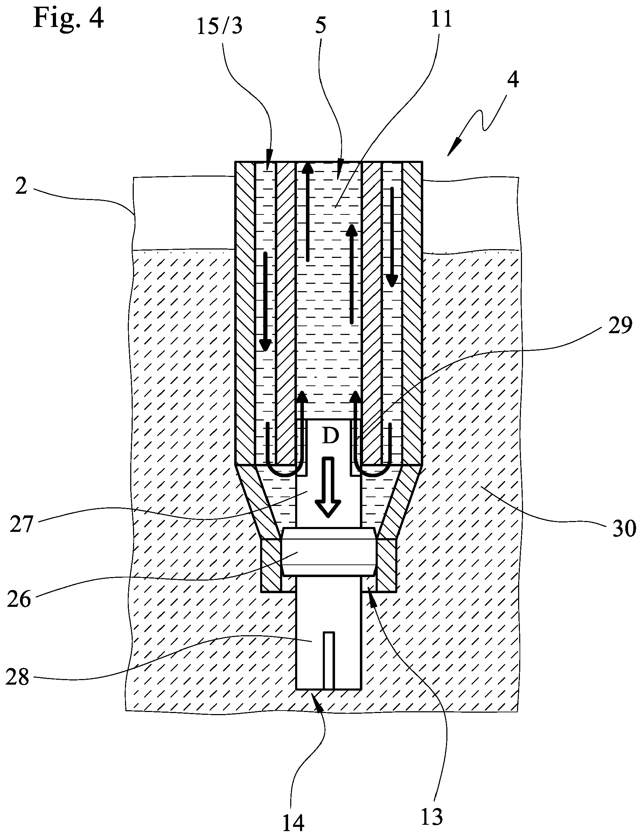

In der Figur 2 ist ausschnittsweise und in stark vereinfachter Darstellung der Zentralauslauf 6 eines Getränkeautomaten 1 mit zugehörigen Strömungsleitungen gezeigt. Die Flussrichtung während eines Spülvorganges ist in der Darstellung durch die Pfeile A und B symbolisiert. Durch die gestrichelte Linie ist in der Figur 2 ferner die Flussrichtung der Milch 30 angedeutet, die während des Ansaugvorganges aus dem Milchvorratsbehälter 2 angesaugt, über den Getränkezulauf 24 und schließlich über die Auslaufdüse 8 in ein darunter abgestelltes Trinkgefäß 9 abgeführt wird. Wie aus der Darstellung der Figur 2 hervorgeht, wird diese Milchleitung 3 auch dazu genutzt, das Strömungsleitungssystem und hier insbesondere die Milch führenden Strömungsleitungen zu spülen beziehungsweise zu reinigen. Zu diesem Zweck wird Spülmittel 11 über die Milchleitung 3 bis in den unteren Teil der Milchleitung 3 geführt, an dem sich ein Fluidansaugmittel 4 befindet, welches nachfolgend in seinem Aufbau und seiner Funktion im Zusammenhang mit der Beschreibung der Figuren 3 und 4 noch näher erläutert wird. In dem Fluidansaugmittel 4 befindet sich ein Verschlussmittel 14 in seiner Verschlussstellung, sodass kein Spülmittel 11 in die Milch 30 des Milchvorratsbehälters 2 eindringen kann. Über eine ebenfalls an dem Fluidansaugmittel 4 angeschlossene Spülmittelrücklaufleitung 5 wird das Spülmittel 11 im Anschluss daran zurückgeführt und, wie dies aus der Figur 2 auch ersichtlich ist, in den Zentralauslauf 6 geleitet, sodass das verbrauchte Spülmittel 11 bei dem dargestellten Beispiel über die Auslaufdüse 8 abgeführt und entsorgt werden kann. Natürlich könnte hierfür auch die andere, an dem Zentralauslauf 6 vorhandene Auslaufdüse 7 verwendet werden. Im vorliegenden Beispiel wurde jedoch die für die Abgabe von Milch 30 oder Milchschaum zum Einsatz kommende Ausgabedüse 8 mit einem Anschluss 10 versehen, der eine Kopplung mit der Spülmittelrücklaufleitung 5 ermöglicht.

Wie zuvor bereits angedeutet wurde, stellt die Figur 3 ein Fluidansaugmittel 4 eines Getränkeautomaten 1 in seiner Offenstellung dar, sodass in dieser Stellung Milch 30 aus dem Milchvorratsbehälter 2 mittels eines Unterdrucks angesaugt werden kann. Das gesamte Fluidansaugmittel 4 ist im wesentlichen als kreiszylindrisches Bauteil ausgeführt und bildet den unteren Abschluss der Milchleitung 3, die somit als Zulauf 15 dient. Das Fluidansaugmittel 4 weist eine Ansaugöffnung 13 auf, über die Milch 30 aus dem Vorratsbehälter 2 angesaugt werden kann, wenn sich das Verschlussmittel 14 in der in Figur 3 gezeigten Offenstellung befindet. Dazu wird das mit einem Verschlusskolben 26 ausgestattete Verschlussmittel 14 in Richtung des in Figur 3 gezeigten Pfeils C bewegt. Das Verschlussmittel verfügt oberhalb und unterhalb des Verschlusskolbens 26 über je einen Führungszapfen 27 und 28, wobei der Führungszapfen 27 in der Spülmittelrücklaufleitung 5 und der Führungszapfen 28 in der Ansaugöffnung 13 geführt sind. In der Offenstellung liegt somit die Stirnfläche 25 des Verschlusskolbens 26 des Verschlussmittels 14 am unteren Rand der Spülmittelrücklaufleitung 5 an, durch die das Spülmittel 11 aus dem Fluidansaugmittel 4 abgeführt werden kann. Die Spülmittelrücklaufleitung 5 ist dadurch unter Bildung einer Dichtung verschlossen. Die Ansaugöffnung 13 des Fluidansaugmittels 4 geht, in Strömungsrichtung der Milch 30 betrachtet, in einen Ansaugraum 12 über, an dem die Milchleitung 3 angeschlossen ist. Die Strömungsrichtung der Milch 30 ist in der Darstellung durch Pfeile symbolisiert.

Mit Hinblick auf die Darstellung in Figur 4 fällt im Unterschied zur Figur 3 auf, dass sich das Verschlussmittel 14 hier in einer Verschlussstellung befindet. Dazu wurde das Verschlussmittel 14 in Richtung des Pfeils D bewegt, sodass der Verschlusskolben 26 die Ansaugöffnung 13 unter Bildung einer Dichtung verschließt. Der in der Spülmittelrücklaufleitung 5 geführte Führungszapfen 27 weist an seinem noch in der Spülmittelrücklaufleitung 5 verbleibenden Abschnitt mehrere Förderspalte 29 auf, sodass über die Milchleitung 3 beziehungsweise den Zulauf 15 eingebrachtes Spülmittel 11 über diese Förderspalte 29 umläuft und über die Spülmittelrücklaufleitung 5 wieder abgeführt werden kann, nachdem das Fluidansaugmittel 4 insgesamt durch das Spülmittel 11 gereinigt wurde. Die Strömungsrichtung des Spülmittels 11 ist in der Darstellung durch Pfeile symbolisiert.

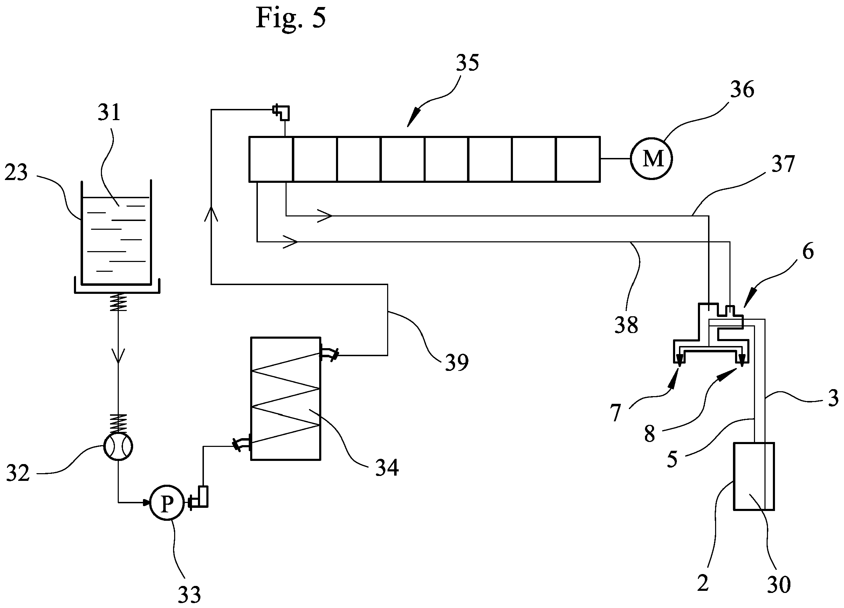

Aus der Figur 5 geht schließlich ein stark vereinfachter Teil des Strömungsleitungssystems eines Getränkeautomaten 1 hervor. Ausgehend von einem Wassertank 23, in dem sich frisches Wasser 31 befindet, dass zur Zubereitung von Aufgussgetränken mit dem Getränkeautomaten 1 sowie zur Spülung des Strömungsleitungssystems Verwendung finden kann, wird das aus dem Wassertank 23 entnommene frische Wasser 31 mit Hilfe einer Pumpe 33 über ein Durchflussmessgerät 32 in eine Heizeinrichtung 34 gepumpt, bei der es sich im vorliegenden Fall um ein Thermostat handelt. Das in der Heizeinrichtung 34 erhitzte Wasser 31 wird im Anschluss daran über die Heißwasserleitung 39 in einen Ventilblock 35 geführt, der für die gesamte Steuerung der einzelnen Fluidkreisläufe des Strömungsleitungssystems des Getränkeautomaten 1 genutzt wird. Der Ventilblock 35 ist automatisch betrieben und weist hierfür einen Motor 36 auf, über den die einzelnen Positionen der Stellventile verändert werden können. Von Bedeutung für die erfindungsgemäße Lösung ist im vorliegenden Fall lediglich ein Teil des Ventilblockes 35, von dem eine Dampfleitung 37 unmittelbar in den Zentralauslauf 6 mündet, wo der Dampf für verschiedene Zwecke verwendet werden kann, so beispielsweise zur Erzeugung eines Unterdruckes nach dem Venturiprinzips, sodass dadurch Milch 30 über die Milchleitung 3 aus dem Milchvorratsbehälter 2 angesaugt werden kann. Darüber hinaus geht von dem Ventilblock 35 eine Luftleitung 38 ab, die auch als Heißwasserleitung Verwendung finden kann. Auch diese Luft- beziehungsweise Heißwasserleitung 38 mündet in einen Teil des Zentralauslaufs 6. Die Verbindung des Zentralauslaufs 6 mit einer Brüheinheit ist in der Figur 5 aus Vereinfachungsgründen nicht gezeigt. Die Darstellung der Figur 5 dient lediglich einer groben Übersicht eines Teils des Strömungsleitungssystems eines Getränkeautomaten 1, um das Verständnis für die erfindungsgemäße Lösung und deren Einbindung in das Strömungsleitungssystemen zu verbessern.

### BEZUGSZEICHENLISTE:

1 Getränkeautomat
2 Milchvorratsbehälter
3 Milchleitung
4 Fluidansaugmittel
5 Spülmittelrücklaufleitung
6 Zentralauslauf
7 Auslaufdüse
8 Auslaufdüse
9 Trinkgefäß
10 Anschluss
11 Spülmittel
12 Ansaugraum
13 Ansaugöffnung
14 Verschlussmittel
15 Zulauf
16 Dampfdüse
17 Abstellfläche / Abtropfblech
18 Öffnungen
19 Front
20 Vorbau
21 Oberseite
22 Behälterdeckel
23 Wassertank
24 Getränkezulauf
25 Stirnfläche
26 Verschlusskolben
27 Führungszapfen (im Zulauf)
28 Führungszapfen (in der Ansaugöffnung)
29 Förderspalt
30 Milch
31 Wasser
32 Durchflussmessgerät
33 Pumpe

### FORTSETZUNG BEZUGSZEICHENLISTE:

34 Heizeinrichtung
35 Ventilblock
36 Motor
37 Dampfleitung
38 Leitung für Luft oder Heißwasser
39 Heißwasserleitung
40 Oberer Vorbau
41 Eingabe- und Anzeigeeinrichtung

## Patentansprüche

1. Getränkeautomat (1) zur Herstellung von Aufgussgetränken, umfassend einen Milchvorratsbehälter (2), wenigstens eine in den Milchvorratsbehälter (2) ragende Milchleitung (3) mit einem Fluidansaugmittel (4) an dem in den Milchvorratsbehälter (2) hineinragenden Ende der Milchleitung (3), eine ebenfalls mit dem Fluidansaugmittel (4) gekoppelte Spülmittelrücklaufleitung (5) sowie einen Zentralauslauf (6) mit Auslaufdüsen (7, 8) zur Abgabe der mit dem Getränkeautomaten (1) hergestellten Getränke sowie deren Zusätze in ein unterhalb des Zentralauslaufs (6) abgestelltes Trinkgefäß (9) oder zur Abgabe des zur Reinigung und/oder Spülung des Strömungsleitungssystems des Getränkeautomaten (1) erforderlichen Spülmittels (11) in ein Gefäß oder in eine unterhalb des Zentralauslaufs (6) vorhandene Abtropfschale,
**dadurch gekennzeichnet, dass**
eine der vorhandenen Auslaufdüsen (7, 8) des Zentralauslaufs (6) einen Anschluss (10) aufweist, an den die Spülmittelrücklaufleitung (5) angeschlossen ist.

2. Getränkeautomat nach Anspruch 1,
**dadurch gekennzeichnet, dass**
die in den Milchvorratsbehälter (2) hineinragende Milchleitung (3) während der Durchführung eines Reinigungs- und Spülprogrammes für die Zuführung des Spülmittels (11) nutzbar ist.

3. Getränkeautomat nach einem der vorstehend genannten Ansprüche,
**dadurch gekennzeichnet, dass**
der Zentralauslauf (6) zwei Auslaufdüsen (7, 8) aufweist und die Spülmittelrücklaufleitung (5) mit der Auslaufdüse (8) für Milch (30) oder Milchschaum oder mit der Auslaufdüse (7) für Kaffee beziehungsweise Tee gekoppelt ist.

4. Getränkeautomat nach einem der vorstehend genannten Ansprüche,
**dadurch gekennzeichnet, dass**
der Zentralauslauf (6) mindestens eine Druckausgleichsöffnung aufweist.

5. Getränkeautomat nach einem der vorstehend genannten Ansprüche,
**dadurch gekennzeichnet, dass**
das Spülmittel (11) ein Reinigungsmittel, Wasser oder Wasserdampf ist.

6. Getränkeautomat nach einem der vorstehend genannten Ansprüche,
**dadurch gekennzeichnet, dass**
das an dem in den Milchvorratsbehälter (2) hineinragenden Ende der Milchleitung (3) angeordnete Fluidansaugmittel (4) einen Ansaugraum (12) mit einer Ansaugöffnung (13) zum Ansaugen der Milch (30) sowie ein Verschlussmittel (14) aufweist, wobei das Verschlussmittel (14) zwischen einer Offenstellung und einer Verschlussstellung hin- und her bewegbar ist, sodass dadurch die Ansaugöffnung (13) geöffnet oder verschlossen werden kann und das Fluidansaugmittel (4) ferner einen Zulauf (15) aufweist, über den bei geschlossener Ansaugöffnung (13) durch die Milchleitung (3) ein Spülmittel (11) in den Ansaugraum (12) einleitbar ist, sodass die Milchleitung (3) und das Fluidansaugmittel (4) von dem Spülmittel (11) gereinigt werden, wobei das Spülmittel (11) über die Spülmittelrücklaufleitung (5) zum Zentralauslauf (6) zurück- und über den Zentralauslauf (6) abführbar ist.

## Claims

1. Beverage machine (1) for preparing infusion beverages, comprising a milk storage container (2), at least one milk line (3) which protrudes into the milk storage container (2) and has a fluid suction means (4) at the end of the milk line (3) protruding into the milk storage container (2), a rinsing agent return line (5) which is also coupled to the fluid suction means (4), and a central outlet (6) having outlet nozzles (7, 8) for dispensing the beverages produced by the beverage machine (1) as well as additives thereof into a drinking vessel (9) positioned under the central outlet (6), or for dispensing the rinsing agent (11) required for cleaning and/or rinsing the flow line system of the beverage machine (1) into a vessel or into a drip tray below the central outlet (6),
**characterised in that**
one of the outlet nozzles (7, 8) of the central outlet (6) has a connection piece (10) to which the rinsing agent return line (5) is connected.

2. Beverage machine according to claim 1,
**characterised in that**
the milk line (3) protruding into the milk storage container (2) can be used to supply the rinsing agent (11) while a cleaning and rinsing program is being carried out.

3. Beverage machine according to either of the preceding claims,
**characterised in that**
the central outlet (6) has two outlet nozzles (7, 8) and the rinsing agent return line (5) is coupled to the outlet nozzle (8) for milk (30) or milk froth or to the outlet nozzle (7) for coffee or tea.

4. Beverage machine according to any of the preceding claims,
**characterised in that**
the central outlet (6) has at least one pressure equalisation opening.

5. Beverage machine according to any of the preceding claims,
**characterised in that**
the rinsing agent (11) is a cleaning agent, water or steam.

6. Beverage machine according to any of the preceding claims,
**characterised in that**
the fluid suction means (4) arranged at the end of the milk line (3) protruding into the milk storage container (2) has a suction chamber (12) with a suction opening (13) for sucking in the milk (30) and also has a closure means (14), it being possible for the closure means (14) to be moved back and forth between an open position and a closed position, so that the suction opening (13) can thereby be opened or closed, and the fluid suction means (4) also has an intake line (15) via which, when the suction opening (13) is closed, a rinsing agent (11) can be fed into the suction chamber (12) through the milk line (3), so that the milk line (3) and the fluid suction means (4) are cleaned by the rinsing agent (11), it being possible to return the rinsing agent (11) to the central outlet (6) via the rinsing agent return line (5), and to discharge it via the central outlet (6).

## Revendications

1. Distributeur automatique de boissons (1) destiné à la préparation des boissons infusées, comprenant un réservoir de stockage de lait (2), au moins une conduite de lait (3) faisant saillie dans le réservoir de stockage de lait (2) et comportant un moyen d'aspiration de fluide (4) au niveau de l'extrémité de la conduite de lait (3) faisant saillie dans le réservoir de stockage de lait (2), une conduite de retour d'agent de rinçage (5) également accouplée au moyen d'aspiration de fluide (4), ainsi qu'une sortie centrale (6) comportant des buses de sortie (7, 8) destinées à la distribution des boissons préparées à l'aide du distributeur automatique de boissons (1) ainsi que de leurs additifs dans un récipient pour boisson (9) placé en dessous de la sortie centrale (6) ou destinées à la distribution de l'agent de rinçage (11) nécessaire au nettoyage et/ou au rinçage d'un système de conduite d'écoulement du distributeur automatique de boissons (1) dans un récipient ou dans un bac d'égouttement présent en dessous de la sortie centrale (6),
**caractérisé en ce que**
l'une des buses de sortie (7, 8) de la sortie centrale (6) comporte un raccord (10) auquel la conduite de retour d'agent de rinçage (5) est raccordée.

2. Distributeur automatique de boissons selon la revendication 1,
**caractérisé en ce que**
la conduite de lait (3) faisant saillie dans le réservoir de stockage de lait (2) peut être utilisée lors de l'exécution d'un programme de nettoyage et de rinçage pour l'acheminement de l'agent de rinçage (11).

3. Distributeur automatique de boissons selon l'une quelconque des revendications précédentes précitées,
**caractérisé en ce que**
la sortie centrale (6) comporte deux buses de sortie (7, 8) et la conduite de retour d'agent de rinçage (5) est accouplée à la buse de sortie (8) pour du lait (30) ou de la mousse de lait ou à la buse de sortie (7) pour du café ou du thé.

4. Distributeur automatique de boissons selon l'une quelconque des revendications précédentes précitées,
**caractérisé en ce que**
la sortie centrale (6) comporte au moins une ouverture de compensation de la pression.

5. Distributeur automatique de boissons selon l'une quelconque des revendications précédentes précitées,
**caractérisé en ce que**
l'agent de rinçage (11) est un agent de nettoyage, de l'eau ou de la vapeur d'eau.

6. Distributeur automatique de boissons selon l'une quelconque des revendications précédentes précitées,
**caractérisé en ce que**
le moyen d'aspiration de fluide (4) disposé au niveau de l'extrémité de la conduite de lait (3) faisant saillie dans le réservoir de stockage de lait (2) comporte un espace d'aspiration (12) comportant une ouverture d'aspiration (13) destiné à l'aspiration du lait (30) et un moyen de fermeture (14), dans lequel le moyen de fermeture (14) peut être déplacé d'avant en arrière entre une position ouverte et une position fermée de telle sorte que l'ouverture d'aspiration (13) peut ainsi être ouverte ou fermée et le moyen d'aspiration de fluide (4) comporte en outre une entrée (15) par l'intermédiaire de laquelle un agent de rinçage (11) peut être introduit dans l'espace d'aspiration (12) par la conduite de lait (3) lorsque l'ouverture d'aspiration (13) est fermée de telle sorte que la conduite de lait (3) et le moyen d'aspiration de fluide (4) sont nettoyés de l'agent de rinçage (11), dans lequel l'agent de rinçage (11) peut être retourné vers la sortie centrale (6) par l'intermédiaire de la conduite de retour d'agent de rinçage (5) et peut être évacué par l'intermédiaire de la sortie centrale (6).
